# EUROPEAN PATENT APPLICATION

(11) **EP 1 236 689 A1**
(43) Date of publication of application: **04.09.2002**
(21) Application number: 01870032.8
(22) Date of filing: 22.02.2001
(51) Int. Cl.: C02F 3/34

(54) **Method for the treatment of aqueous effluent**

(71) Applicant: Realco 2001 S.A./N.V., 1348 Louvain-la-Neuve (BE)
(72) Inventor: Ledent, Philippe, 4000 Liege (BE); Czochara, Magali, 87330 Meziere sur Issoire (FR); Debois, Valérie, 5310 Dhuy (BE); Blackman, Gordon, 1380 Lasne (BE)
(74) Representative: Van Malderen, Joelle

(57) **Abstract**

The present invention is related to a method for the treatment of aqueous effluents, in particular waste waters, characterised in that it comprises at least the step of adding bacteria which are not resistant to antibiotics.

## Description

### Field of the invention

The present invention is related to a method for the treatment of aqueous effluents, in particular waste water, characterised in that it comprises at least the step of adding bacteria which are not resisting to antibiotics.

The present invention is also related to a kit comprising means to perform said method of treatment.

### Background and state of the art

The use of pure cultures or defined consortia of microorganisms, especially bacteria, is a widespread technology for the treatment of specific polluted aqueous effluents. Among these bacteria, strains belonging to the Pseudomonas, Bacillus, Acinetobacter and Rhodococcus genera are frequently reported (Chitra et al. (1996); Zissi & Lyberatos (1996); RU-96441455.44; Iliuta (1997); FR-97154177.14).

Since the discovery of Penicillin by Fleming in 1948, antibiotics have been increasingly used in animal and human medicines, food, feed and beverage for their curative properties. β-lactamins, aminoglycosides, macrolides, glycopeptides are examples of such antibiotics currently used.

The use of bacteria able to resist to antibiotics is commonly claimed as a commercial argument by companies specialised in the manufacture of kits for the treatment of waste waters (for instance biological activators ATMOSBIO™ from the company ATMOS (France), biological activators Foss micro billes™ from de company BEVIL (Belgium), biological activators TARAX™ from the company Werner & Mertz (Belgium) or other biological activators sold under the trademark WC Net™ or Harpic™ presenting the same characteristics.

However, the extensive use of antibiotics has led to the selection of new resistant bacterial strains which may represent a real potential threatening for plants, animals (including humans) and the general environment.

### Aims of the invention

The present invention aims to provide an alternative method for the treatment of aqueous effluents, in particular waste waters, which would be safer for the environment, especially for plants and animals (including humans).

### Summary of the invention

The present invention relates to a method for the treatment of aqueous effluents, in particular waste waters, with bacteria, comprising at least the step of adding bacteria from the same or from different species that are not resistant to antibiotics and are possibly lyophilised.

Advantageously, said bacteria are selected from the group consisting of Bacillus, Pseudomonas, Acinetobacter and Rhodococcus genera.

According to the invention, said method further comprises the step of adding additives which are nutrients for said bacteria, such as carbon sources like glucose or other saccharides, nitrogen and phosphor sources and mineral components like sodium and potassium, and/or enzymes.

Said enzymes are those commonly used for the cleaning of waste waters, and are preferably selected from the group consisting of proteases, cellulases, alpha-amylases, lipases or a mixture thereof obtained from the same or from different microorganisms such as *Bacillus* (preferably *Bacillus subtilis*), *Rhodococcus*,...

The present invention also relates to a kit for the treatment of aqueous effluents, in particular waste waters, characterised in that it comprises at least bacteria that are not resistant to antibiotics.

According to the invention, said bacteria are selected from the group mentioned hereabove and are preferably lyophilised.

Advantageously, said kit also comprises nutrients and enzymes as those mentioned hereabove.

The advantages of said method and said kit presented in the enclosed example are:
(i) an increase in the capacity of the polluted media to be treated and to be biodegraded ;
(ii) a reduction in the proportion of microorganisms able to resist to antibiotics and which will be maintained in the environment ;
(iii) a reduction in the frequency of possible deleterious gene transfer (gene coding for the resistance to antibiotics) from one type to other microorganisms types, especially from non-pathogenic and resistant microorganisms to pathogenic and possibly non-resistant microorganisms ;
(iv) a reduction in the risks related to the proliferation of microorganisms that are resistant to antibiotics and pathogenic for plants, animals and humans.

### Short description of the drawings

Figure 1 represents the bacterial growth, followed by measuring the optical density at 585 nm of two *Acinetobacter* strains (resistant P and sensitive C1) on a laboratory medium containing increased concentrations of amoxycillin (0, 10, 50 or 200 ppm).

Figure 2 represents the bacterial growth, followed by measuring the oxygen uptake of the resistant (P), sensitive (C1) and of the mixture (C1+P) of two *Acinetobacter* strains in a waste water medium.

### Detailed description of the invention

The specific characteristics of the present invention are described hereafter in the following non limited example.

### Material and methods

### Strains

Two different strains of *Acinetobacter* were studied. The first one, which is called the resistant strain P, is available on the market; its antibiogram reveals a resistance against ampicillin, a penicillin and against augmentin, a mixture of amoxycillin and clavulanic acid, a penicillin and a penicillinase inhibitor, respectively. The second one, which is called the sensitive strain C1, was isolated from a sample of sediments issuing from the sewage network at Braine-l'Alleud (Belgium).

### Enzymes

The commercial enzymes used in the formulation of the kit are a *Bacillus subtilis* proteinase, a cellulase, an alpha-amylase and a lipase. Product specifications are given by the Realco Company.

### Media and culture conditions

The *laboratory medium* is composed of casein (5g/l), yeast extract (2,5g/l) and glucose (1g/l). The pH is adjusted to 7.0 by addition of NaOH. Sterilisation of the media is performed by autoclaving at 121°C for 15 minutes. The concentrated solution of amoxycillin is sterilised by filtration through a membrane with a porosity of 0,22µm.

The *waste water medium* corresponds to a waste water sampled at the input of the treatment plant of Marbais (Belgium). After sterilisation by autoclaving, the following parameters were determined: pH = 8.0, chemical oxygen demand (COD) = 540 mg 02 / liter.

The *agar medium* corresponds to the Plate Count Agar obtained from Difco (Detroit, MI, USA). Addition of amoxycillin is performed, when the temperature of the agar medium is 60°C using sterilised concentrated antibiotic solution.

Liquid cultures were performed at 20°C, the orbital agitation being fixed at 150 rpm. Incubation of agar media is made at 20°C.

### Results

### Determination of the inhibitory tresholds for the two studied strains of Acinetobacter

The laboratory medium composed of casein, yeast extract and glucose is inoculated either with the resistant strain of *Acinetobacter* "P" or the sensitive one "C1". The bacterial growth is monitored by measuring the optical density at 585 nm.

The following concentrations of amoxicillin, a beta-lactam antibiotic, are used: 0, 10, 50 and 200 ppm. The resistant strain "P" is able to grow at an antibiotic concentration of 10 ppm; the growth of the sensitive one is completely inhibited at that concentration.

### Co-culture of the two strains of Acinetobacter on the waste water media

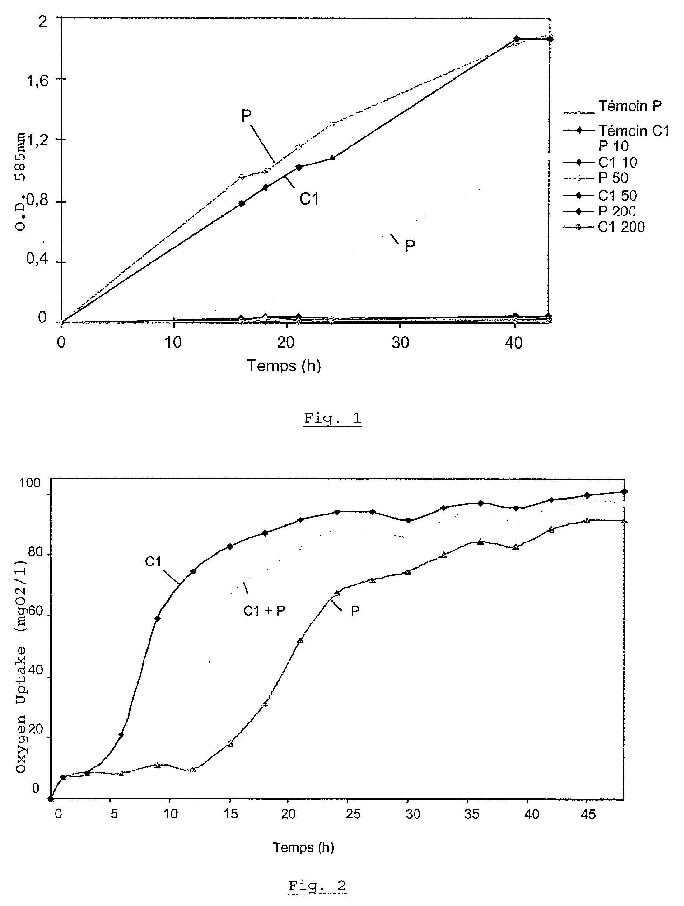

The waste water medium is inoculated with either the resistant strain of *Acinetobacter* "P", the sensitive one "C1" or a mixture of them (C1+P). The bacterial growth was measured by following the oxygen uptake as a function of time (Figure 2).

The proportion of resistant and sensitive bacteria was determined at different times: t=0 and t=48hours (Table 1). The method used to determine this proportion is based upon the bacterial enumeration of a sample spread upon the surface of two different agar media: the first one was prepared with an amoxycillin concentration of 10 ppm, the other one without any addition of antibiotic. The bacteria enumerated upon the first agar media correspond to the resistant one; those enumerated upon the second agar medium correspond to the complete mixture; the difference measured between the two agar media corresponds to the sensitive bacteria.

The waste water medium is inoculated with either resistant, sensitive or a mixture of the two strains of *Acinetobacter.* An identical number of bacteria is used as inoculum for each case, the relative proportion of sensitive and resistant bacteria being different for the three conditions. Indeed, the inoculum is composed of 100% of sensitive or resistant bacteria for the corresponding pure culture; 87% of resistant bacteria and 13% of sensitive bacteria are used for inoculating the mixed culture.

The bacterial growth rate measured by following the oxygen uptake (Figure 2) in the waste water medium is faster, when only the sensitive bacteria C1 are used for the inoculation. The latent period is longer and the growth rate is slower for the medium inoculated with only resistant bacteria P. An intermediate situation is observed when the mixture C1+P is used.

The proportion of the two bacteria in the mixed culture is determined 48 hours after the inoculation. A drastic change in the proportion of the two bacterial populations is observed. Indeed, the sensitive bacteria which represent only 13% of the total population at the beginning of the culture become the main population (84%) at the end of the culture.

**Table 1**

| | | |
|---|---|---|
| Table 1 shows the evolution of the ratio of the resistant (P) and sensitive strains (C1) of *Acinetobacter* during the culture on the waste water medium. | | |

| **Time (h)** | **P** | **C1** |
|---|---|---|
| 0 | 87% | 13% |
| 48 | 16% | 84% |

In conclusion, this experiment demonstrates the following data.

On the contrary to the general opinion, the resistance against antibiotics that are commonly used in medecine (i.e., amoxycilline, augmentin,...) does not represent a feature necessary for the bacteria to grow on a waste water medium. Indeed, the growth of the resistant *Acinetobacter* strain is slow as compared to that of the sensitive one.

Furthermore, the addition of small concentrations of sensitive bacteria in a waste water reduces the proportion of resistant microorganisms.

### REFERENCES

1. **Chitra, S. et al.** J. Gen. Appl. Microbiol. **42:** 355-361 (1996)
2. **Zissi, U. & Lyberatos, G.** Wat. Sci. Technol. **34:** 495-500 (1996)
3. **ILIUTA, I.** J. Chem. Technol. Biotechnol. **68:** 47-56 (1997)

## Claims

1. Method for the treatment of aqueous effluents, in particular waste waters, **characterised in that** it comprises at least the step of adding bacteria which are not resistant to antibiotics.

2. Method according to claim 1, **characterised in that** said bacteria are selected from the group consisting of *Bacillus, Pseudomonas, Acinetobacter* and *Rhodococcus* genera.

3. Method according to claim 1 or 2, **characterised in that** it further comprises the step of adding nutrients for said bacteria and/or enzymes.

4. Method according to claim 3, **characterised in that** said nutrients are selected from the group consisting of carbon, nitrogen, phosphor and mineral sources.

5. Method according to claim 3, **characterised in that** said enzymes are selected from the group consisting of proteases, cellulases, alpha-amylases, lipases or a mixture thereof.

6. Kit of parts for the treatment of aqueous effluents, in particular waste waters, according to the method of any one of the preceding claims, **characterised in that** it comprises:
- bacteria that are not resistant to antibiotics and are preferably lyophilised,
- nutrients for said bacteria, and
- enzymes.

7. Kit according to claim 8, **characterised in that** said enzymes are selected from the group consisting of proteases, cellulases, alpha-amylases, lipases or a mixture thereof.
